# EUROPÄISCHE PATENTANMELDUNG

(11) **EP 1 443 236 A1**
(43) Veröffentlichungstag der Anmeldung: **04.08.2004**
(21) Anmeldenummer: 03002109.1
(22) Anmeldetag: 30.01.2003
(51) Int. Cl.: F16D 69/02, D03D 3/08

(54) **Verfahren zur Herstellung von Reibbelägen für Reibringe nasser Reibsysteme**

(71) Anmelder: HOERBIGER Antriebstechnik GmbH, 86956 Schongau (DE)
(72) Erfinder: Rank, Robert, Dr.-Ing., 86946 Vilgertshofen-Stadl (DE); Schmitt, Thilo, 86956 Schongau (DE)
(74) Vertreter: Hager, Thomas J., Dipl.-Ing.

(57) **Zusammenfassung**

Zur Einsparung von Material bei der Herstellung von Reibbelägen für Reibringe nasser Reibsysteme, wird erfindungsgemäß ein Verfahren vorgeschlagen, bei dem ein spiralförmiges Weben eines entsprechend den Abmessungen des Reibringes konfektionierten Endlos-Band aus Faserwerkstoff durchgeführt wird. Nach dem Weben wird das Endlos-Band in 360°-Schritten in ringförmige Einzelsegmente aufgeteilt.

## Beschreibung

Die Erfindung betrifft ein Verfahren zur Herstellung von Reibbelägen für Reibringe nasser Reibsysteme, insbesondere für Getriebe-Reibringe, gemäß Anspruch 1. Ferner betrifft die Erfindung einen Reibbelag für Reibringe nasser Reibsysteme gemäß Anspruch 8 sowie einen Reibring gemäß Anspruch 9.

Reibringe nasser Reibsysteme, insbesondere Getriebe-Reibringe oder Getriebe-Lamellen, weisen einen Trägerkörper auf, der zumindestens auf einer Seite mit einem Reibbelag beschichtet ist. Derartige Reibbeläge können u.a. aus gewebten Faserstoffen hergestellt werden. Bei bekannten Verfahren wird hierfür ein Fasergewebe hergestellt, aus dem nach dem Webvorgang ringförmige Reibbeläge oder ringförmige Segmente ausgestanzt werden, deren Dimensionierung an die Dimensionen des jeweiligen zu beschichtenden Reibringes angepasst sind.

Der Nachteil dieser bekannten Verfahren ist vor allem in dem hohen Materialausschuss zu sehen, der sich durch den Stanzvorgang ergibt, da das innerhalb des ausgestanzten Reibringes übrig bleibende gewebte Material keiner Verwendung zugeführt werden kann.

Ferner ergeben sich Probleme bei derartig hergestellten Reibbelägen, da insbesondere die Kanten des Reibbelages im Betrieb des Reibringes ausfransen können, da der Reibbelag durch den Stanzvorgang an seinen Kanten zum Ausfransen neigende geschnittene Fasern aufweist.

Es ist daher Aufgabe der vorliegenden Erfindung, ein Verfahren zur Herstellung von Reibbelägen für Reibringe nasser Reibsysteme zu schaffen, das in erster Linie eine optimale Materialausnutzung ermöglicht.

Die Lösung dieser Aufgabe erfolgt durch die Merkmale des Anspruches 1.

Mit dem erfindungsgemäßen Verfahren kann ein spiralförmig gewebtes Endlos-Band aus geeignetem Faserwerkstoff hergestellt werden, das nach dem Webvorgang in 360°-Schritten aufgeteilt werden kann, sodass ringförmige Reibbeläge entstehen, die mit dem Belagträger, beispielsweise dem Trägermaterial einer Getriebe-Lamelle, verbunden werden kann.

Als besonders vorteilhaft ist hierbei hervorzuheben, dass eine optimale Materialausnutzung erreichbar ist, da der Belagring bei der Herstellung durch entsprechende Konfektionierung optimal an den Belagträger angepasst werden kann.

Ferner ergibt sich der Vorteil, dass mit dem erfindungsgemäßen Verfahren ein Reibbelag hergestellt werden kann, der sich durch einen in Umfangsrichtung des Belagträgers verlaufenden Kettfaden und einen Schussfaden in radialer Richtung auszeichnet. Dies ergibt eine extrem hohe innere Festigkeit des Gewebes und eine sehr hohe Tragfähigkeit des Reibbelages.

Die Unteransprüche 2 bis 7 haben vorteilhafte Weiterbildungen des erfindungsgemäßen Verfahrens zum Inhalt.

Vorteilhafterweise können die Kanten des Reibbelages beim Webvorgang eingefasst werden, was die Tendenz zum Ausfransen weiter senkt.

Grundsätzlich ist es möglich, als Faserwerkstoff jedwede Art webbarer Faserwerkstoffe einzusetzen. Vorzugsweise können zur Erreichung besonders guter Reibeigenschaften in der Belastungsrichtung, also in Umfangsrichtung des Reibringes, hochwertige Fasern, wie beispielsweise spezielle Funktionsfasern, z.B. Aramidfasern (Nomex®, Kevlar®) oder Carbonfasern, eingesetzt werden, während in Schussrichtung kostengünstige Strukturfasern, z.B. Polyamidfasern, Baumwollfasern, zum Einsatz kommen können.

Ferner ist es möglich, zur Beeinflussung der Reibeigenschaften des mit dem erfindungsgemäßen Verfahren hergestellten Reibbelages verschiedenste Nut- und Feldgeometrien ohne Materialverlust oder Schädigung bei der Herstellung des Reibbelages darzustellen, wobei insbesondere schräge Nuten zur Ölführung besonders bevorzugte Ausführungsformen darstellen. Bei mehrlagiger Ausführung ist die gezielte Einbringung von Kavitäten zur Ölspeicherung möglich.

In weiteren Fertigungsschritten kann der derart hergestellte Reibbelag gefilzt, imprägniert, beschichtet, gefärbt oder appliziert werden. Schließlich ist es möglich, einen ein- oder mehrlagigen Reibbelag herzustellen.

In Anspruch 8 ist ein Reibbelag für Reibringe nasser Reibsysteme als selbständig handelbares Objekt definiert.

Schließlich ist in Anspruch 9 ein Reibring als selbständig handelbares Objekt definiert, der mit einem Reibbelag, entsprechend Anspruch 8 versehen ist.

Weitere Einzelheiten, Merkmale und Vorteile der Erfindung ergeben sich aus nachfolgender Beschreibung von Ausführungsbeispielen anhand der Zeichnung. Es zeigt:
- Fig. 1: eine Bandspirale, die entsprechend dem erfindungsgemäßen Verfahren hergestellt ist, und
- Fig. 2: eine schematische Strukturdarstellung eines Reibbelages gemäß vorliegender Erfindung.

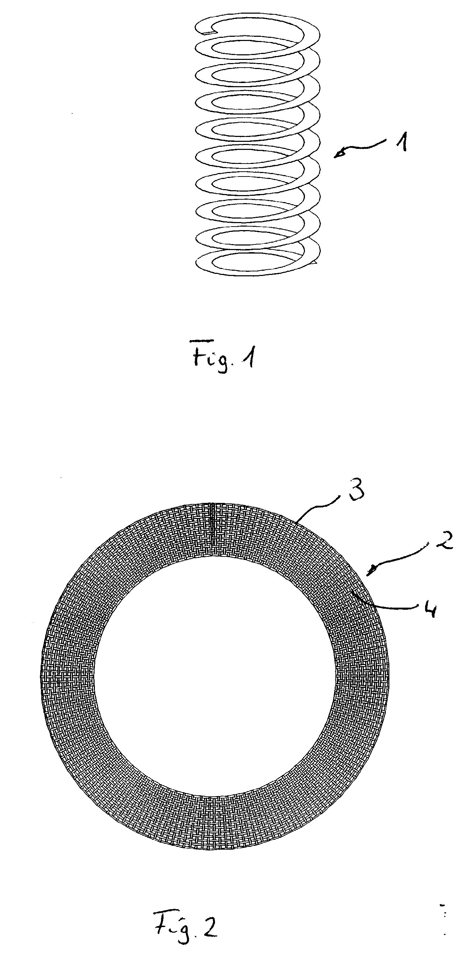

Die Fig. 1 ist beispielhaft und in schematisch vereinfachter Darstellung eine Bandspirale 1 dargestellt, die gemäß dem erfindungsgemäßen Verfahren durch spiralförmiges Weben hergestellt wird. Die Bandspirale 1 ist zuvor an die Dimension des Reibringes konfektioniert worden, auf dem der mit dem erfindungsgemäßen Verfahren herzustellende Reibbelag aufgebracht werden soll. Daher ist es nicht erforderlich, nach dem Webvorgang die Bandspirale auszustanzen, um einen ringförmigen Reibbelag, entsprechend den Dimensionen des Reibringes, herzustellen. Vielmehr ist es lediglich nötig, die Endlos-Bandspirale in 360°-Schritten aufzuteilen, wodurch ringförmige Einzelsegmente entstehen, die auf der bzw. den Reibseiten des Trägermaterials des jeweiligen Reibringes aufgebracht werden können. Hierzu kann beispielsweise eine Klebung verwendet werden.

In Fig. 2 ist ein derartiges 360°-Reibbelag-Segment dargestellt, das dementsprechend einen geschlossenen Ring darstellt. Aus Fig. 2 ist ersichtlich, dass der Reibbelag 2 Kettfäden aufweist, von denen beispielhaft ein Kettfaden mit der Bezugsziffer 3 gekennzeichnet ist, die in Umfangsrichtung verlaufen, während die Schussfäden 4 in radialer Richtung verlaufen. Dies ergibt die eingangs erläuterten besonderen Vorteile des erfindungsgemäßen Reibbelages.

## Patentansprüche

1. Verfahren zur Herstellung von Reibbelägen für Reibringe nasser Reibsysteme, insbesondere Getriebe-Reibringe, mit folgenden Verfahrensschritten:
- spiralförmiges Weben eines entsprechend den Abmessungen des Reibringes konfektionierten Endlos-Bandes aus Faserwerkstoff; und
- Aufteilung des Endlos-Bandes in 360°-Schritten in ringförmige Einzelsegmente.

2. Verfahren nach Anspruch 1, **dadurch gekennzeichnet, dass** die Kanten des Reibbelages eingefasst werden.

3. Verfahren nach Anspruch 1 oder 2, **dadurch gekennzeichnet, dass** als Faserwerkstoff Funktionsfasern verwendet werden.

4. Verfahren nach Anspruch 1 oder 2, **dadurch gekennzeichnet, dass** als Faserwerkstoff Strukturfasern verwendet werden.

5. Verfahren nach einem der Ansprüche 1 bis 4, **dadurch gekennzeichnet, dass** unterschiedliche Nut- und/oder Feldgeometrien in den Reibbelag eingewebt werden.

6. Verfahren nach einem der Ansprüche 1 bis 5, **dadurch gekennzeichnet, dass** das Endlos-Band gefilzt, imprägniert, beschichtet, gefärbt und/oder appliziert wird.

7. Verfahren nach einem der Ansprüche 1 bis 6, **dadurch gekennzeichnet, dass** ein ein- oder mehrlagiges Endlos-Band gewebt wird.

8. Reibbelag für Reibringe nasser Reibsysteme, **gekennzeichnet durch** wenigstens eines der Merkmale 1 bis 7.

9. Reibring für nasse Reibsysteme, insbesondere Getriebe-Reibring oder Getriebe-Lamelle, **gekennzeichnet durch** einen Reibbelag gemäß Anspruch 8.
